# EUROPÄISCHE PATENTSCHRIFT

(11) **EP 0 422 408 B1**
(45) Veröffentlichungstag und Bekanntmachung des Hinweises auf die Patenterteilung: **07.06.1995**
(21) Anmeldenummer: 90117719.6
(22) Anmeldetag: 14.09.1990
(51) Int. Cl.: B60R 22/26

(54) **Rückstrammeinrichtung für Sicherheitsgurt-Rückhaltesysteme in Fahrzeugen**
Tensioning device for safety belt restraint systems in vehicles
Dispositif tendeur pour systèmes de retenue à ceinture de sécurité dans des véhicules

(30) Priorität: 09.10.1989 DE 3933724
(43) Veröffentlichungstag der Anmeldung: 17.04.1991
(73) Patentinhaber: TRW Occupant Restraint Systems GmbH, 73553 Alfdorf (DE)
(72) Erfinder: Föhl, Artur, D-7060 Schorndorf (DE)
(74) Vertreter: Degwert, Hartmut, Dipl.-Phys.

(56) Entgegenhaltungen:
- EP-A- 0 306 299
- DE-A- 2 918 179
- DE-A- 2 946 717
- US-A- 3 977 724
- US-A- 3 977 724

## Beschreibung

Die Erfindung betrifft eine Rückstrammeinrichtung für Sicherheitsgurt-Rückhaltesysteme gemäß dem Oberbegriff des Anspruchs 1.

Bei einer aus der DE-A-29 46 717 bekannten Rückstrammeinrichtung dieser Art ist ein Gurtfänger schwenkbar am Zylinderblock angebracht. Wird der Zylinderblock aus der Bereitschaftsstellung herausbewegt, so wird der Gurtfänger in den Führungsteil verschwenkt, wodurch der Gurt von einem äußeren Querglied des Gurtfängers erfaßt und unter Bildung einer Schlaufe gestrafft wird. Der Kolben ist getrennt von der Kolbenstange ausgebildet. In der Bereitschaftsstellung sind der Rückstrammantrieb und der Gurt außer Eingriff. Während der Gurtstraffung durch den pyrotechnischen Rückstrammantrieb schleift der Gurt an dem äußeren Querglied des Gurtfängers. Es besteht somit die Gefahr einer Abnutzung oder Beschädigung des Gurtes. Zudem treten während der Gurtstraffung Verluste auf, so daß die Einrichtung entsprechend groß dimensioniert werden muß. Überdies ist dadurch auch die Ansprechgeschwindigkeit begrenzt.

Es sind Rückstrammeinrichtungen für Sicherheitsgurt-Rückhaltesysteme bekannt, die am Gurtaufroller angreifen und im Aktiviervngsfalle eine gewisse Gurtbandlänge auf den Gurtaufroller aufrollen, um die Gurtlose aus dem Gurtsystem herauszuziehen.

Es sind auch Rückstrammeinrichtungen bekannt, die unmittelbar in den Kraftflußweg des Sicherheitsgurtsystems eingefügt sind, beispielsweise in Form eines am Fahrzeugaufbau verankerten Zylinders und eines in diesem durch einen pyrotechnischen Gasgenerator beaufschlagbaren Kolbens, an den ein Gurtschloß über eine Kolbenstange angeschlossen ist. Eine solche Rückstrammeinrichtung arbeitet weitgehend verlustfrei und zeichnet sich auch durch eine hohe Ansprechgeschwindigkeit aus, da sie unmittelbar in den Kraftflußweg des Sicherheitsgurtsystems eingefügt ist, jedoch läßt sie sich aufgrund ihrer großen Baulänge kaum in üblichen Fahrzeugen integrieren.

Aus der Druckschrift US-A-3 977 724 ist eine Rückstrammeinrichtung für Sicherheitsgurt-Rückhaltesysteme in Fahrzeugen bekannt, die einen pyrotechnischen Kolben/Zylinder-Rückstrammantrieb aufweist. Der Zylinder ist an einem Führungsteil, welches am Fahrzeugsitz befestigt ist, verschiebbar angeordnet und mit einem Befestigungsbeschlag für den Gurt verbunden. An dem Kolben ist eine Kolbenstange angeschlossen, die aus dem Zylinder herausragt und deren freies Ende gleichfalls am Fahrzeugsitz befestigt ist. Bei Aktivierung einer pyrotechnischen Ladung wird der Kolben mit Druckgasen beaufschlagt, so daß der Zylinder mit dem daran befestigten Beschlag zu dem Befestigungspunkt der Kolbenstange hin gezogen wird, um die effektive Gurtbandlänge zu vermindern. Da in der normalen Bereitschaftsstellung dieser Rückstrammeinrichtung die Kolbenstange aus dem Zylinder herausragt, erfordert die Rückstrammeinrichtung eine große Bauhöhe.

Es wurden auch bereits Rückstrammeinrichtungen mit mechanischem Rückstrammantrieb vorgeschlagen. Der Rückstrammantrieb wird bei diesen Ausführungen von einem Kraftspeicher wie einer gespannten Feder abgeleitet. Ein solcher Kraft-Speicher besitzt jedoch eine mit dem Rückstrammweg verhältnismäßig stark abfallende Charakteristik, so daß gegen Ende des Rückstrammweges eine befriedigende Rückstrammkraft nur erreicht werden kann, wenn der Kraftspeicher entsprechend stark dimensioniert wird. Die definierte Auslösung eines solchen stark dimensionierten Kraftspeichers bei einer bestimmten Fahrzeugverzögerung bereitet aber große Schwierigkeiten.

Der Erfindung liegt die Aufgabe zugrunde, eine Rückstrammeinrichtung zur Verfügung zu stellen, die eine hohe Rückstrammkraft erzeugt, die Rückstrammung innerhalb einer sehr kurzen Zeitspanne durchführt und aufgrund ihrer geringen Baugröße und günstigen Formgebung leicht in übliche Fahrzeuge integriert werden kann.

Die Aufgabe wird nach der Erfindung dadurch gelöst, daß daß der Kolben/Zylinder-Rückstrammantrieb über am Kolben einerseits und am Zylinder andererseits angreifende Beschlagteile permanent in den Kraftflußweg des Sicherheitsgurtsystems eingefügt ist, daß das am Kolben angreifende Beschlagteil mit dem Führungsteil verbunden ist, und daß der Kolben an dem ersten Ende der Kolbenstange ausgebildet ist. Im Bereitschaftszustand ist der Kolben mit der Kolbenstange vollständig in den Zylinder eingeschoben, so daß der Kolben/Zylinder-Rückstrammantrieb eine Baulänge aufweist, die kaum größer ist als der Rückstrammhub. Da die Rückstrammeinrichtung unmittelbar in den Kraftflußweg des Sicherheitsgurtsystems eingefügt ist, erfolgt die Rückstrammung weitgehend verlustfrei, so daß der Rückstrammantrieb schwächer dimensioniert werden kann als bei Rückstrammeinrichtungen, die am Gurtaufroller angreifen. Die benötigten Rückstrammkräfte werden daher mit einem im Durchmesser entsprechend klein dimensionierten Kolben/Zylinder-Antrieb erzielt, so daß der gesamte Rückstrammantrieb auch quer zur Rückstrammeinrichtung nur wenig Baugröße beansprucht.

Besonders vorteilhaft ist eine Ausführungsform der Erfindung, bei welcher der Zylinder in einem plattenförmigen Zylinderblock ausgebildet ist. Eine besonders flache Bauform des Zylinderblocks wird erzielt, wenn gemaß einer weiteren vorteilhaften Ausführungsform zwei parallele, im Abstand voneinander in demselben Zylinderblock angeordnete Kolben/Zylinder-Einheiten verwendet werden, die durch einen gemeinsamen pyrotechnischen Gasgenerator beaufschlagbar sind. Da jede einzelne Kolben/Zylinder-Einheit einen geringeren Durchmesser aufweisen kann als eine einzige Kolben/Zylinder-Einheit für gleiche Rückstrammkraft, wird die Dicke des plattenförmigen Zylinderblocks weiter vermindert.

Die erfindungsgemäße Rückstrammeinrichtung bietet günstige Voraussetzungen für die Verwirklichung eines Energiewandlers, der Belastungsspitzen im Sicherheitsgurtsystem im Anschluß an den Rückstrammvorgang abbaut. Es ist an sich bereits aus der DE-A-29 18 179 bekannt, einen mit plastischer Materialverformung arbeitenden Energiewandler, der von einer Kolben/Zylinder-Anordnung abgeleitet ist, in den Kraftfluß eines Sicherheitsgurtes einzufügen. Gemäß einer Weiterbildung der Erfindung ist vorgesehen, daß der Kolben/Zylinder-Rückstrammantrieb zugleich eine Rücklaufbremse bildet, die nach erfolgter Rückstrammung eine Rückbewegung des Zylinderblocks in Richtung seiner Ausgangsstellung unter Energiewandlung zuläßt. Herkömmliche Rückstrammantriebe sind mit einer Rücklaufsperre versehen. Es wurde nun gefunden, daß sich im Anschluß an die Rückstrammphase ein besonders günstiger und von Belastungsspitzen freier Kraftverlauf im Gurtbandsystem ergibt, wenn anstelle einer Rücklaufsperre eine Rücklaufbremse verwendet wird, die eine kontrollierte Rückbewegung des Zylinderblocks in Richtung seiner Ausgangsstellung unter gleichzeitiger Umformung von kinetischer Energie in Verformungsarbeit zur plastischen Verformung des Zylinderblockmaterials zuläßt. Eine solche energiewandelnde Rücklaufbremse kann ohne zusätzlichen Aufwand verwirklicht werden, indem zwischen Kolben und Kolbenstange ein umlaufender Freiraum geschaffen wird, der axial durch je eine Ringschulter und radial innen durch eine Kegelfläche begrenzt ist, deren kleine Basis auf der Seite des Kolbens gelegen ist, wobei in dem Freiraum mehrere Wälzkörper aufgenommen sind, deren Durchmesser etwa der mittleren radialen Tiefe des Freiraumes entspricht, wobei die Bremsfunktion dadurch zustande kommt, daS die Wälzkörper in das Material der Zylinderwandung eindringen und eine plastische Verformung desselben unter Bildung von Längsrillen zustande kommt. Der Durchmesser und die Anzahl der Wälzkörper sowie das Material des Zylinders werden so aufeinander abgestimmt, daß eine reproduzierbar definierte Rücklaufbremskraft erzeugt wird. Es wurde gefunden, daß jeder einzelne Wälzkörper einen gut reproduzierbaren Beitrag zur Bremskraft leistet, so daS die gesamte Bremskraft über die Anzahl von Wälzkörpern eingestellt werden kann. Der Durchmesser der Wälzkörper wird so bemessen, daS eine bestimmte Eindringtiefe in dem Material des Zylinderblocks erreicht wird. Für den Zylinderblock wird ein relativ weiches Material verwendet, vorzugsweise Aluminium oder eine Aluminiumlegierung, deren plastische Verformung gut beherrschbar ist.

Für einen pyrotechnischen Gasgenerator wird ein Zünder benötigt. Herkömmliche Rückstrammeinrichtungen mit pyrotechnischem Rückstrammantrieb sind mit einem elektrischen Zünder ausgestattet, der über eine aufwendige Elektronik angesteuert wird, welche die Fahrzeugverzögerung auswertet.

Es wurde gefunden, daß die erfindungsgemäße Rückstrammeinrichtung mit einem einfachen mechanischen Zündmechanismus ausgestattet werden kann, der unmittelbar fahrzeugsensitiv anspricht und weder einer aufwendigen Elektronik noch einer elektrischen Verbindungsleitung bedarf. Von besonderem Vorteil ist, daß jede Rückstrammeinrichtung, da sie mit ihrem eigenen mechanischen Zündmechanismus versehen ist, eine autonome Einheit bildet.

Eine bevorzugte Ausführungsform des mechanischen Zündmechanismus umfaßt eine schwenkbar gelagerte, fahrzeugsensitive Trägheitsmasse, ein federbeaufschlagtes, schwenkbar gelagertes Schlagstück, einen Schlagbolzen, der mit einem freien Ende dem Schlagzünder des Gasgenerators gegenüberliegend und mit seinem anderen Ende dem Schlagstück gegenüberliegend angeordnet ist, und einen Auslösemechanismus, der im Bereitschaftszustand das Schlagstück im Abstand von dem gegenüber-liegenden Ende des Schlagbolzens hält und bei fahrzeugsensitiver Verschwenkung der Trägheitsmasse nach Überwindung einer Hemmschwelle das Schlagstück freigibt, welches dann unter der Wirkung der Federbeaufschlagung zu dem gegenüberliegenden Ende des Schlagbolzens getrieben wird, auf diesem aufschlägt und über den Schlagbolzen die Zündung des Gasgenerators bewirkt. Der Auslösemechanismus wird vorzugsweise als Rollengesperre ausgebildet. Ein solches Rollengesperre umfaßt eine an dem vom Schlagbolzen abgewandten Ende des Schlagstücks gelagerte Halterolle, eine an der Trägheitsmasse gelagerte Auslöserolle, eine gehäusefest gelagerte Stützrolle und eine im Bereitschaftszustand zwischen Halterolle, Auslöserolle und Stützrolle gehaltene, lose Sperrolle. Im Bereitschaftszustand nimmt die Sperrolle zwischen der Halterolle und der Stützrolle eine Übertotpunktlage ein, in der sie durch die Auslöserolle gehalten wird. Die Auslöserolle ihrerseits befindet sich in einer Übertotpunktlage, in der sie durch ein gehäusefestes Widerlager abgestützt ist. Bei fahrzeugsensitiver VerSchwenkung der Trägheitsmasse gibt die Auslöserolle die Sperrolle frei, die dann zwischen Stützrolle und Halterolle herausgeschleudert wird, wodurch der Weg der Halterolle freigegeben wird und das Schlagstück unter der Wirkung der Federbeaufschlagung zu dem Schlagbolzen hingetrieben wird.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: einen Teilschnitt einer ersten Ausführungsform der Rückstrammeinrichtung;
- Fig. 2: eine schematische Seitenansicht der Rückstrammeinrichtung nach Fig. 1;
- Fig. 3: eine auseinandergezogene Perspektivansicht der in den Fig. 1 und 2 gezeigten Rückstrammeinrichtung;
- Fig. 4 und 5: einen Teilschnitt bzw. eine schematische Seitenansicht zur Erläuterung der Funktionsweise der in den Fig. 1 bis 3 gezeigten Rückstrammeinrichtung;
- Fig. 6: einen schematischen Längsschnitt einer Kolben/Zylinder-Einheit der Rückstrammeinrichtung;
- Fig. 7: einen Querschnitt der Kolben/Zylinder-Einheit vor dem Wirksamwerden einer ihr zugeordneten Rücklaufbremse;
- Fig. 8: einen Querschnitt der Kolben/Zylinder-Einheit nach vollendeter Funktion der Rücklaufbremse;
- Fig. 9 und 10: Querschnitte je einer Ausführungsvariante der Kolben/Zylinder-Einheit;
- Fig. 11: eine Perspektivansicht eines Käfigs für die in Fig. 10 ersichtlichen Wälzkörper;
- Fig. 12: einen schematischen Längsschnitt, der die Ausbildung einer Ausführungsform des Kolbens mit Kolbenstange und Wälzkörpern zeigt;
- Fig. 13: eine Variante der in Fig. 12 gezeigten Ausführungsform;
- Fig. 14: einen schematischen Schnitt eines mechanischen Zündmechanismus, der zur Verwendung mit der beschriebenen Ausführungsform der Rückstrammeinrichtung geeignet ist, im Bereitschaftszustand;
- Fig. 15: den Zündmechanismus von Fig. 14 im aktivierten Zustand;
- Fig. 16: eine auseinandergezogene Perspektivansicht des in den Fig. 14 und 15 gezeigten Zündmechanismus;
- Fig. 17: eine schematische Teilansicht eines als Rollengesperre ausgebildeten Auslösemechanismus;
- Fig. 18: eine schematische Draufsicht einer weiteren Ausführungsform der Rückstrammeinrichtung;
- Fig. 19: einen schematischen Teilschnitt einer dritten Ausführungsform der Rückstrammeinrichtung;
- Fig. 20: einen Teilschnitt einer vierten Ausführungsform; und
- Fig. 21: einen schematischen Teilschnitt einer fünften Ausführungsform der Rückstrammeinrichtung.

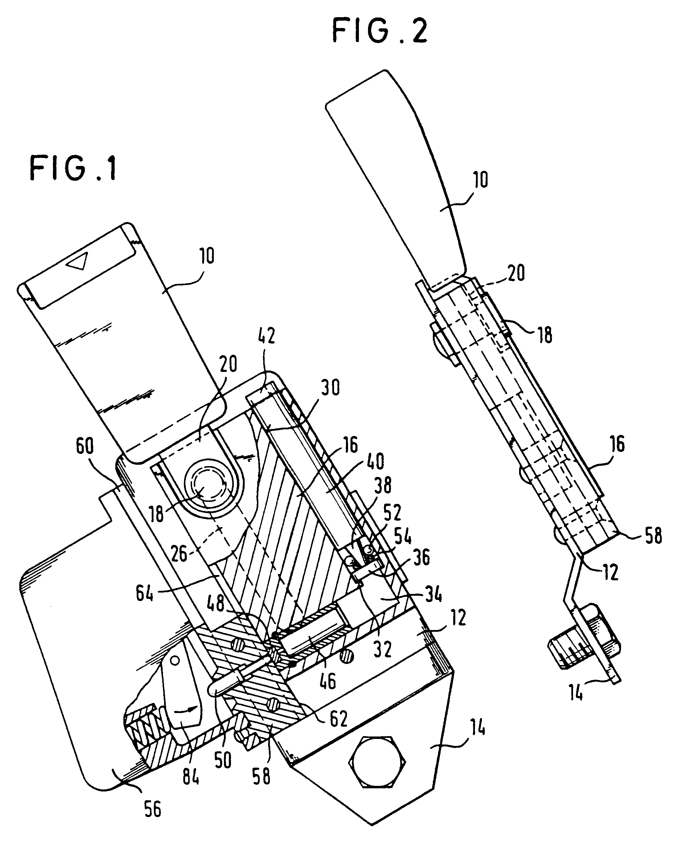

Die beschriebene Ausführungsform der Rückstrammeinrichtung ist für den Einbau zwischen einem Gurtschloß 10 und einem (nicht gezeigten) Fahrzeugaufbau oder Fahrzeugsitz bestimmt. Die Befestigung am Fahrzeugaufbau oder an einem Fahrzeugsitz erfolgt mittels einer Führungsplatte 12, die mit einem abgekröpften Befestigungsbeschlag 14 versehen ist. An der Führungsplatte 12 gleitverschiebbar gelagert ist ein allgemein plattenförmiger, in Draufsicht rechteckförmiger Zylinderblock 16, an dessen einem Längsende das Gurtschloß 10 mittels eines Befestigungsbolzens 18 über einen Befestigungsbeschlag 20 des Gurtschlosses 10 befestigt ist. Der Schaft 22 des Befestigungsbolzens 18 durchsetzt eine Verankerungsbohrung 24 des Zylinderblocks 16 und durchgreift einen Längsschlitz 26 der Führungsplatte 12. Der Zylinderblock 16 ist vorzugsweise ein Preßprofilteil aus Aluminium und an seiner einen Längsseite mit einer angeformten teilzylindrischen Randleiste 28 versehen. Im Bereich dieser Randleiste 28 ist der Zylinderblock 16 mit einer Bohrung versehen, die einen auf der Seite des Gurtschlosses 10 offenen Zylinder 30 bildet, welcher auf der gegenüberliegenden Seite durch eine Ringschulter 32 abgegrenzt ist und in einen entlang einer Schmalseite des Zylinderblocks 16 verlaufenden Gasbeaufschlagungskanal 34 einmündet. An der Ringschulter 32 sitzt ein Kolben 36 an, der über einen konischen Schaft 38 mit einer starren Kolbenstange 40 verbunden ist. Die Kolbenstange 40 weist auf ihrem von dem Kolben 36 abgewandten Ende ein abgewinkeltes Abstützteil 42 auf, das formschlüssig in eine entsprechende Öffnung 44 der Führungsplatte 12 eingreift. Im Bereitschaftszustand, der in den Fig. 1 und 2 gezeigt ist, sind der Kolben 36, der Schaft 38 und die Kolbenstange 40 vollständig in den Zylinder 30 eingeschoben. Nur das Abstützteil 42 ragt aus dem Zylinder 30 heraus, so daß der Kolben über die Kolbenstange 40 an der Führungsplatte 12 abgestützt ist. In das von dem Kolben 36 abgewandte, an der entsprechenden Schmalseite des Zylinderblocks 16 offene Ende des Gasbeaufschlagungskanals 34 ist ein patronenförmiger Gasgenerator 46 eingesetzt. Der Gasgenerator 46 ist mit einem Schlagzünder 48 versehen, der gegenüber dem einen Ende eines Schlagbolzens 50 eines später zu beschreibenden Zündmechanismus angeordnet ist.

Im Bereich des konischen Schaftes 38 ist ein Freiraum gebildet, der axial durch je eine Ringschulter, radial innen durch die Oberfläche des Schaftes 38 und radial außen durch die Innenoberfläche des Zylinders 30 begrenzt ist. In diesem Freiraum sind mehrere Wälzkörper 52 in Form von Stahlkugeln in Umfangsrichtung angeordndet. Der Durchmesser dieser Wälzkörper 52 ist etwa gleich der radialen Höhe des sie aufnehmenden Freiraumes in der Mitte des Schaftes 38. Mittels eines elastischen O-Ringes 54 werden die Wälzkörper 52 entlang der Außenoberfläche des Schaftes 38 in Anlage an die Innenwandung des Zylinders 30 gedrückt.

Der später im einzelnen zu beschreibende Zündmechanismus ist in einem flachen Gehäuse 56 untergebracht, das mit seiner einen Schmalseite der von dem Zylinder 30 abgewandten Längskante des Zylinderblocks 16 gegenüberliegend angeordnet und über ein Winkelstück 58, das an eine Bodenplatte 60 des Gehäuses 56 angeformt ist, an der Führungsplatte 12 befestigt ist. An dem Winkelstück 58 ist eine Führungsleiste 62 angeformt, die in eine Nut 64 eingreift, welche entlang der von dem Zylinder 30 abgewandten Schmalkante des Zylinderblocks 16 angebracht ist. Die Führungsplatte 12 ist auf ihrer dem Zylinder 30 benachbarten Seite mit einem hochgebogenen Führungsteil 65 versehen, welches der Führungsleiste 62 gegenüberliegend den Zylinderblock 16 abstützt und so zur sauberen Führung desselben auf der Führungsplatte sowie zwischen der Führungsleiste 62 und dem Führungsteil 65 beiträgt.

Es wird nun die Funktionsweise der beschriebenen Rückstrammeinrichtung näher erläutert.

Der in den Fig. 1 und 2 gezeigte Bereitschaftszustand hält das Gurtschloß 10 über den Zylinderblock 16 in einer bedienungsfreundlichen Position, beispielsweise an der Seite eines Fahrzeugsitzes. Der Zylinderblock 16 befindet sich in seiner einen Extremstellung, bei welcher der Schaft 22 des Befestigungsbolzens 18 an dem vom Beschlagteil 14 abgewandten Ende des Längsschlitzes 26 anliegt. In diesem Zustand sind der Kolben 36, der Schaft 38 und die Kolbenstange 40 vollständig in den Zylinder 30 eingetaucht. Der in dem Gehäuse 56 angeordnete Zündmechanismus spricht fahrzeugsensitiv auf ein bestimmtes Maß überschreitende Fahrzeugverzögerungen an, um den Schlagbolzen 50 in den Schlagzünder 58 zu treiben und den Gasgenerator 46 zu zünden. Der aktivierte Gasgenerator 46 erzeugt Druckgase, die über den Gasbeaufschlagungskanal 34 in den Zylinder 30 eintreten und den Zylinderblock 16 in Richtung des Beschlagteils 14 treiben, da der Kolben 36 an der Führungsplatte 12 abgestützt ist. Bei diesem Vorgang werden der Kolben 36, der Schaft 38 und die Kolbenstange 40 auf Schub beansprucht. Der Zylinderblock 16 wird nun innerhalb von wenigen Millisekunden über die vorgesehene Rückstrammstrecke angetrieben, die der Länge des Längsschlitzes 26 entspricht. Das Ende des Rückstrammhubes ist erreicht, wenn der Schaft 22 des Befestigungsbolzens 18 an dem dem Beschlagteil 14 benachbarten Ende des Längsschlitzes 26 anstößt. Das Gurtschloß 10 wird durch den Zylinderblock 16 mitgenommen und leitet so die Rückstrammkraft in das Gurtsystem ein.

Nach erfolgter Rückstrammung können in dem Gurtsystem, wenn die Vorverlagerung des Fahrzeuginsassen beginnt, hohe Beanspruchungsspitzen auftreten. Um diese abzubauen, ist bei der hier vorgestellten Rückstrammeinrichtung das durch die Wälzkörper 52, den kegelförmigen Schaft 38 und die Innenwandung des Zylinders 30 gebildete Klemmgesperre nicht als Rücklaufsperre, sondern als Rücklaufbremse ausgebildet. Der Durchmesser der Wälzkörper 52 und das Material, aus dem der Zylinderblock 16 gebildet ist, sind so aufeinander abgestimmt, daß die Wälzkörper 52 bis zu einer reproduzierbar definierten Tiefe in die Wandung des Zylinders 30 eindringen und diese unter Bildung von Längsrillen verformen. Jeder einzelne Wälzkörper 52 erzeugt auf diese Weise eine gut beherrschbare Bremskraft. Die gesamte Bremskraft wird durch die Anzahl von Wälzkörpern 52 bestimmt und kann so über die Anzahl von Wälzkörpern auf die gewünschte Größe eingestellt werden. Diese Rücklaufbremse bildet einen Energiewandler, durch den die aus dem Gurtsystem eingeleitete Energie in Verformungsarbeit zur plastischen Verformung des Materials des Zylinderblocks 16 umgesetzt wird.

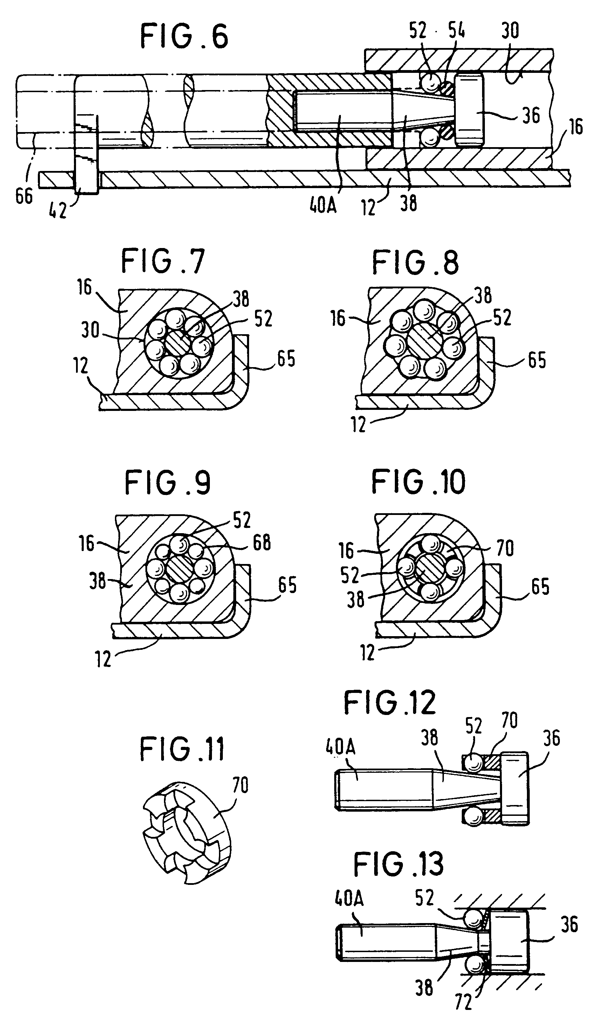

Fig. 7 zeigt die den kegelförmigen Schaft 38 umgebenden Wälzkörper 52 in Anlage an dem Innenumfang des Zylinders 30 vor Aktivierung des Gasgenerators 46; Fig. 8 zeigt dieselben Wälzkörper 52 in einer durch den Außenumfang des Schaftes 38 radial auswärts gedrückten Stellung, in der sie in das Material des Zylinderblocks 16 eingedrungen sind und dieses plastisch verformt haben. Der in Fig. 8 gezeigte Zustand tritt ein, wenn nach erfolgter Rückstrammung die beschriebene Rücklaufbremse in Funktion getreten ist. Im Extremfalle wird der Zylinderblock 16 nahezu bis in seine Ausgangslage zurückbewegt, wobei dann ein erheblicher Anteil der aus dem Gurtsystem eingeleiteten Energie in plastische Verformung umgesetzt ist. Der Fahrzeuginsasse wird auf diese Weise vor schädlichen Beanspruchungsspitzen bewahrt.

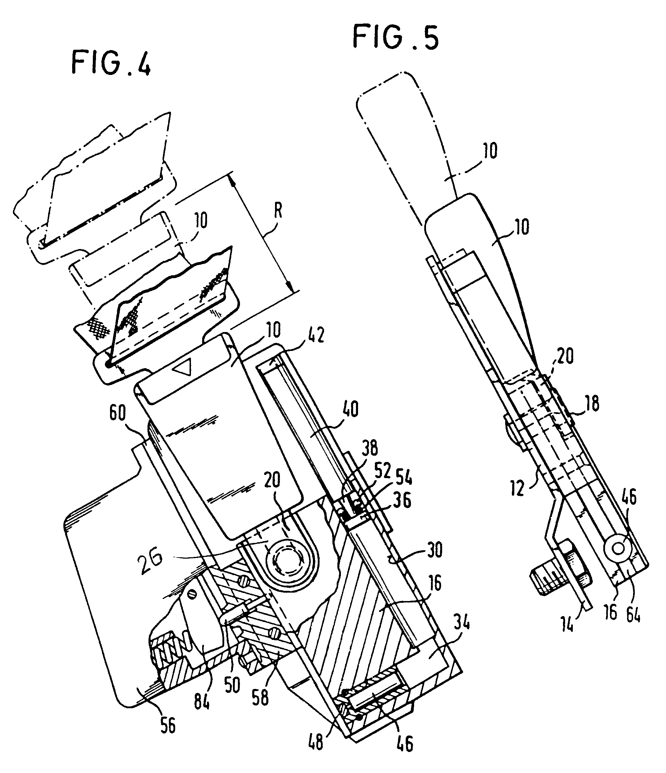

In den Fig. 4 und 5 ist die Rückstrammeinrichtung nach erfolgter Rückstrammung mit durchgezogenen Linien dargestellt, während gestrichelt die Stellung des Gurtschlosses in der Bereitschaftsstellung gezeigt ist. Die Rückstrammstrecke ist durch das Maß R verdeutlicht, welches in etwa der Länge des Längsschlitzes 26 entspricht. Fig. 5 zeigt, daß für die Rückstrammbewegung des Zylinderblocks 16 keinerlei Bauraum benötigt wird, da in der Rückstrammstellung die von dem Gurtschloß 10 abgewandte Schmalkante des Zylinderblocks 16 nicht über das Ende des Beschlagteils 14 hinausragt. Weiterhin zeigt Fig. 5, daß die Abkröpfung des Beschlagteils 14 von Vorteil ist, da so der Befestigungsbolzen, mit dem das Beschlagteil 14 am Fahrzeugaufbau oder am Fahrzeugsitz verankert wird, aus der Bahn des Zylinderblocks 16 heraus verlagert wird.

Fig. 6 zeigt eine Maßnahme, welche die Montage des Zylinders 30 auf dem Kolben 36 erleichtert. Die Maßnahme besteht darin, daß auf die Kolbenstange 40A eine geschlitzte Hülse 66 aufgeschoben ist, die auf dieser Kolbenstange in Axialrichtung gleitverschiebbar ist und mit Kolben 36 und Kolbenstange 40A in den Zylinder 30 eingeschoben wird. Da die Wälzkölper 52 durch den elastischen O-Ring in ihre Klemmstellung zwischen dem kegelförmigen Schaft 36 und der Innenwandung des Zylinders 30 gedrückt werden, widersetzen sie sich der Relativbewegung zwischen Kolben 36 und Zylinder 30 in Einschubrichtung. Die Hülse 66 wird nun auf der Kolbenstange 40A so weit vorgeschoben, bis ihr dem Kolben 36 benachbartes Ende an den Wälzkörpern 52 anliegt und dem elastischen O-Ring 54 entgegenwirkt. Die Wälzkörper 52 können nun keine Klemmwirkung entfalten. Nach beendigter Montage kann die Hülse 66 entfernt werden.

Die Fig. 9 und 10 zeigen je eine Ausführungsvariante mit nur vier Wälzkörpern 52. Bei der in Fig. 9 gezeigten Ausführungsform sind die Wälzkörper 52 jeweils durch im Durchmesser kleiner bemessene Kugeln 68 voneinander beabstandet. Bei der Ausführungsform nach Fig. 10 sind die Wälzkörper 52 in einem Käfig 70 gehalten, der in Fig. 11 gesondert gezeigt ist und die Wälzkörper 52 in Umfangsrichtung gleichmäßig voneinander beabstandet hält.

Fig. 12 zeigt den Käfig 70 in einer Funktion als elastisches Teil, welches die Wälzkörper 52 analog zu dem elastischen O-Ring 54 in Fig. 6 gegen die Innenoberfläche des Zylinders 30 vorspannt.

Bei der Ausführungsform nach Fig. 13 wird diese Beaufschlagung der Wälzkörper 52 durch eine Tellerfeder 72 bewirkt, die zwischen Kolben 36 und den Wälzkörpern 52 angeordnet ist.

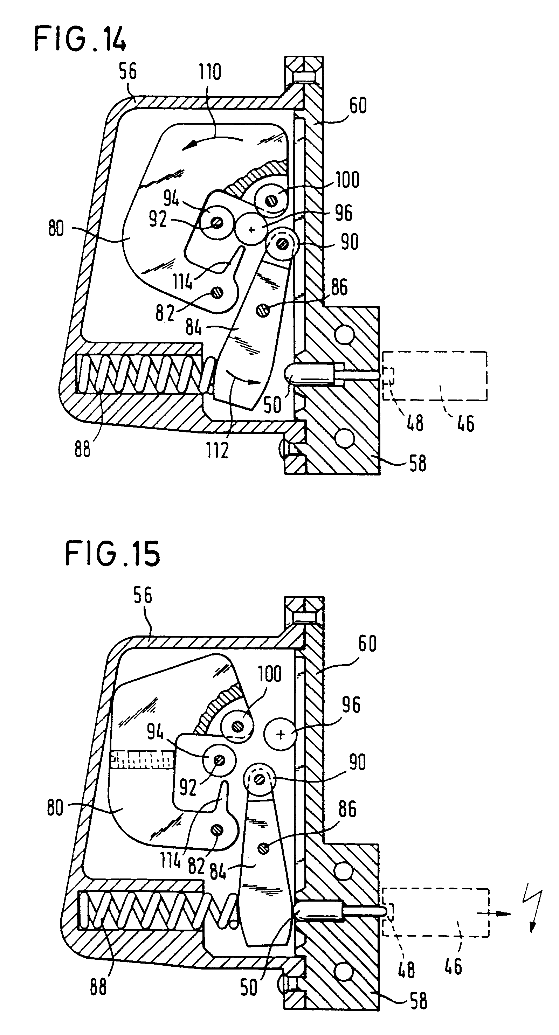

Anhand der Fig. 14 bis 16 wird nun der Zündmechanismus beschrieben.

Im Inneren des flachen Gehäuses 56 ist eine Trägheitsmasse 80 in Form eines allgemein U-förmigen Bügels angeordnet, der auf einem gehäusefesten Stift 82 am freien Ende des einen Schenkels schwenkbar gelagert ist. Ein Schlagstück 84 in Form eines zweiarmigen Hebels ist auf einem gehäusefesten Stift 86 schwenkbar gelagert. Der eine Arm des Schlagstücks 84 wird durch eine Druckfeder 88 in Richtung des im Abstand gegenüberliegenden freien Endes des Schlagbolzens 50 beaufschlagt. Am freien Ende des anderen Armes des Schlagstücks 84 ist eine Halterolle 90 drehbar gelagert. Weiterhin ist auf einem gehäusefesten Stift 92 eine Stützrolle 94 drehbar gelagert. Zwischen der Stützrolle 94 und der Halterolle 90 ist eine lose Sperrolle 96 angeordnet. Schließlich ist eine Auslöserolle 100 am freien Ende des anderen Schenkels der Trägheitsmasse 80 drehbar gelagert.

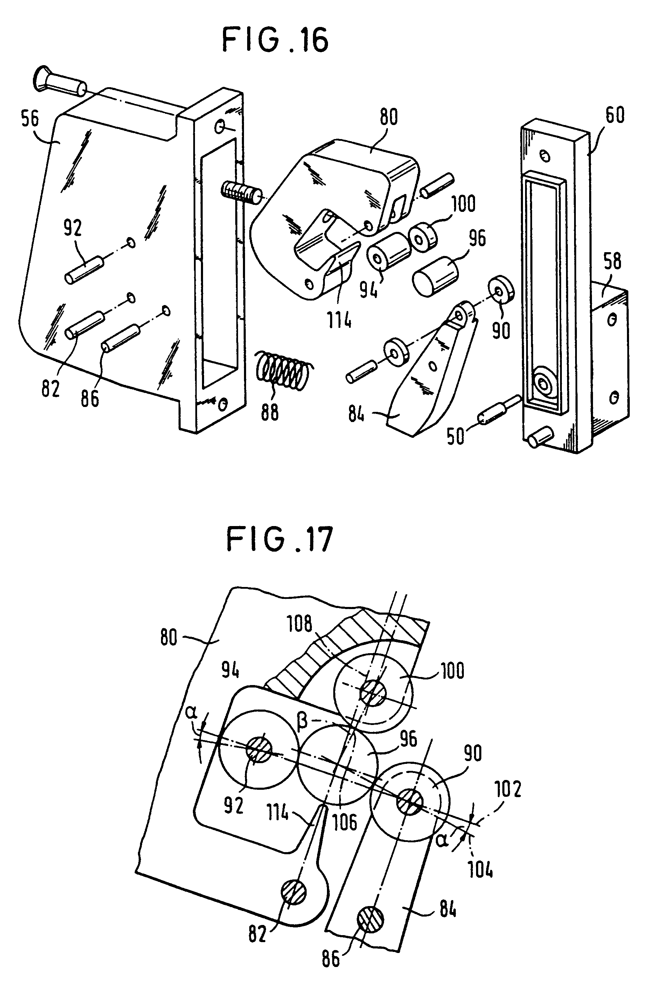

Auf Fig. 17 wird Bezug genommen. Die lose Sperrolle 96 befindet sich zwischen den an den Ecken eines Dreiecks angeordneten Rollen 90, 94 und 100 und liegt mit ihrem Außenumfang jeweils am Außenumfang dieser Rollen an. Die Halterolle 90 wird durch die Wirkung der Druckfeder 88 gegen den Außenumfang der Sperrolle 96 gedrückt, die ihrerseits gegen den Außenumfang der Auslöserolle 100 drückt, da sie am Außenumfang der Stützrolle 94 abgestützt wird. Die Sperrolle 96 befindet sich zwischen der Stützrolle 94 und der Halterolle 90 in einer Übertotpunktlage, die dadurch gekennzeichnet ist, daß der Winkel α zwischen einer Geraden 102 durch die Mittelpunkte der Rollen 90 und 94 und der Geraden 104 durch die Mittelpunkte der Rollen 90 und 96 eine Größe von wenigen Grad aufweist. Die Rolle 96 ist also bestrebt, sich zu der Auslöserolle 100 hin zu verlagern. Diese Halterolle 100 befindet sich ihrerseits in einer Übertotpunktlage, die durch einen Winkel β gekennzeichnet ist, der zwischen einer Geraden 106 durch die Mittelpunkte der Rollen 96 und 100 und einer Geraden 108 gebildet ist, welche senkrecht zu der die Mittelpunkte der Rollen 94, 90 verbindenden Geraden 102 verläuft. Die Auslöserolle 100 kann ihrer Neigung, sich im Sinne einer Vergrößerung des Winkels β zu verlagern, nicht folgen, da die Trägheitsmasse 80 mit der Innenfläche ihres die beiden Schenkel verbindenden Steges am Außenumfang der Stützrolle 94 anliegt. Ebenso gut könnte aber die Trägheitsmasse 80 an einem anderen Anschlag anliegen, durch den die Auslöserolle 100 in einer metastabilen Lage gehalten wird.

Die Trägheitsmasse 80 bildet ein fahrzeugsensitives Auslöseelement. Unter der Wirkung einer Fahrzeugverzögerung wird sie aufgrund ihrer Massenträgheit in Richtung des Pfeiles 110 (Fig. 14) um den Stift 82 verschwenkt, sobald eine bestimmte Hemmschwelle überwunden ist, die durch die Größe der Winkel α, β, die Kraft der Druckfeder 88 und die Hebelübersetzung des Schlagstücks 84 gegeben ist und genau eingestellt werden kann. Sobald die Hemmschwelle überwunden ist, die Auslöserolle 100 sich also zunächst im Sinne einer Verkleinerung des Winkels β (Fig. 17) und darüber hinaus bewegt hat, unterstützt die Druckfeder 88 die weitere Verschwenkung der Trägheitsmasse 80 in Richtung des Pfeiles 110 (Fig. 14), so daß die Verschwenkung der Trägheitsmasse 80 mit hoher Winkelbeschleunigung erfolgt. Innerhalb einer extrem kurzen Zeitspanne gibt die Auslöserolle 100 die lose Sperrolle 96 frei, die zwischen den Rollen 90, 94 herausgeschleudert wird und die Bahn der Halterolle 90 freigibt, so daß nunmehr das Schlagstück 84 unter der Wirkung der Druckfeder 88 in Richtung des Pfeiles 112 verschwenkt und gegen das benachbarte freie Ende des Schlagbolzens 50 getrieben wird. Der Schlagbolzen 50 dringt mit seinem gegenüberliegenden freien Ende in den Schlagzünder 48 ein und aktiviert den Gasgenerator 46. Fig. 15 zeigt diesen Zustand.

Um die Montage der Sperrolle 36 zu erleichtern, ist am freien Endes des schwenkbar gelagerten Schenkels der Trägheitsmasse 80 ein schnabelförmiger Fortsatz 114 angeformt, der in der in Fig. 14 gezeigten Bereitschaftsstellung auf die Sperrolle 96 zu gerichtet ist und in geringem Abstand von dieser endet.

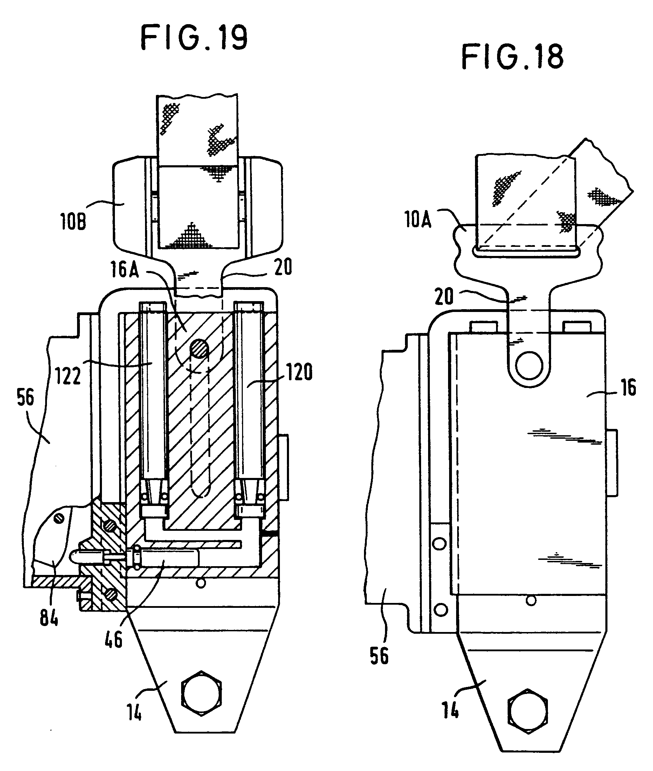

Bei der in der Fig. 18 gezeigten Ausführungsvariante der Rückstrammeinrichtung ist an dem Zylinderblock 16 über das Beschlagteil 20 nicht ein Gurtschloß, sondern ein Umlenkbeschlag 10A befestigt.

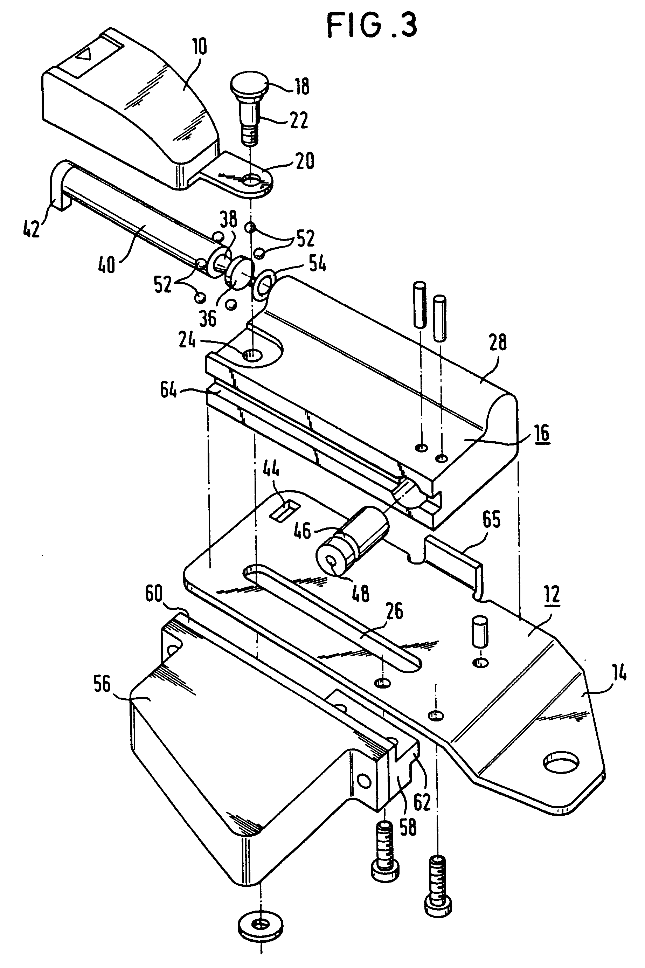

Bei der in Fig. 19 gezeigten Ausführungsform ist der Kolben/Zylinder-Rückstrammantrieb mit zwei Kolben/Zylinder-Einheiten 120, 122 versehen, die parallel und im Abstand voneinander in demselben Zylinderblock 16A entlang den Längskanten desselben angeordnet sind und über einen gemeinsamen pyrotechnischen Gasgenerator 46 beaufschlagt werden. Jede einzelne Kolben/Zylinder-Einheit kann im Durchmesser kleiner dimensioniert werden als der Zylinder 30 bei der Ausführungsform nach den Fig. 1 bis 5, so daß der Zylinderblock 16A insgesamt in geringerer Bauhöhe ausgeführt werden kann.

Wie weiterhin aus Fig. 19 ersichtlich ist, wird an dem Zylinderblock 16A über das Beschlagteil 20 nicht ein Gurtschloß, sondern ein Gurtaufroller 10B befestigt.

Im übrigen sind die Ausführungsformen nach den Fig. 18 und 19 gegenüber der zuvor beschriebenen Ausführungsform unverändert und werden daher nicht weiter im einzelnen beschrieben.

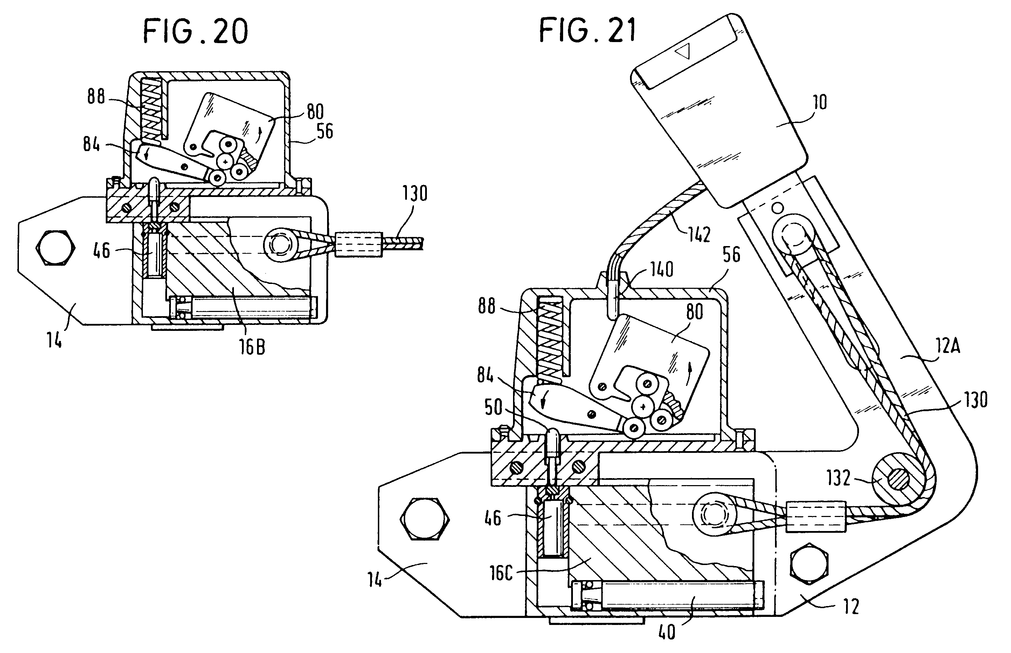

Auch die Ausführungsformen nach den Fig. 20 und 21 sind prinzipiell gleich aufgebaut wie die zuvor beschriebenen Ausführungsformen; sie unterscheiden sich von diesen nur dadurch, daß an dem Zylinderblock 16B (Fig. 20) bzw. 16C (Fig. 21) das Beschlagteil des Gurtsystems nicht unmittelbar, sondern über ein flexibles Zugseil 130 angreift. Bei der Ausführungsform nach Fig. 21 wird dieses Zugseil 130 überdies durch eine Umlenkrolle 132 umgelenkt. Das Führungsteil 12 weist einen abgewinkelten Arm 12A auf, an dem das Gurtschloß 10 längsverschiebbar geführt ist und an dem die Umlenkrolle 32 drehbar gelagert ist. Eine weitere Besonderheit der in Fig. 21 gezeigten Ausführungsform besteht darin, daß die Trägheitsmasse 80 in ihrer Bereitschaftsstellung so lange gesichert bleibt, wie das Gurtsystem unbenutzt ist. Zu diesem Zweck greift an der Trägheitsmasse 80 ein Stift 140 an, der in einer Gehäusebohrung des Gehäuses 56 verschiebbar gelagert ist und in die Bewegungsbahn der Trägheitsmasse 80 hineinragt, solange keine Steckzunge in das Gurtschloß 10 eingesteckt ist. Die Einsteckbewegung der Steckzunge in das Gurtschloß 10 wird über einen Seilzug 142 auf den Stift 140 übertragen, der dann aus der Bahn der Trägheitsmasse 80 herausgezogen wird und diese entsichert. Da zahlreiche Ausführungsformen einer Sicherung möglich sind, wird diese hier nur symbolisch beschrieben.

Ein Vergleich der Fig. 1 und 20 oder 21 zeigt, daß der beschriebene Zündmechanismus, obwohl er fahrzeugsensitiv anspricht, nicht an eine bestimmte Einbauorientierung gebunden ist. Günstig ist eine Einbauorientierung, bei welcher die durch den Schwerpunkt und die Schwenkachse der Trägheitsmasse 80 verlaufende Gerade einen Winkel von etwa 45° mit der Senkrechten bildet. Der Zündmechanismus kann dann unverändert auch um 90° verdreht eingebaut werden.

## Patentansprüche

1. Rückstrammeinrichtung für Sicherheitsgurt-Rückhaltesysteme in Fahrzeugen, mit einem pyrotechnischen Kolben/Zylinder-Rückstrammantrieb, wobei wenigstens der Zylinder (30) des Kolben/Zylinder-Rückstrammantriebs in einem Zylinderblock (16) gebildet ist, der an einem fahrzeugaufbaufesten oder fahrzeugsitzfesten Führungsteil (12) parallel zur Achse des Zylinders (30) verschiebbar geführt ist, der Kolben (36) ein erstes Ende einer Kolbenstange (40) beaufschlagt, die mit ihrem zweiten Ende an dem Führungsteil (12) abgestützt ist, der Kolben (36) in der Bereitschaftsstellung der Rückstrammeinrichtung mit der Kolbenstange (40) in den Zylinder (30) eingeschoben ist und bei Druckbeaufschlagung des Kolbens die Kolbenstange (40) auf Schub beansprucht wird, und wobei der Zylinderblock (16) von dem zweiten Ende der Kolbenstange (40) fort gedrückt wird, dadurch gekennzeichnet, daß der Kolben/Zylinder-Rückstrammantrieb über am Kolben (36) einerseits und am Zylinder (30) andererseits angreifende Beschlagteile (14, 20) permanent in den Kraftflußweg des Sicherheitsgurtsystems eingefügt ist, daß das am Kolben (36) angreifende Beschlagteil (14) mit dem Führungsteil (12) verbunden ist und daß der Kolben (36) an dem ersten Ende der Kolbenstange (40) ausgebildet ist.

2. Rückstrammeinrichtung nach Anspruch 1, **dadurch gekennzeichnet**, daß der Zylinderblock (16) als flache, in Draufsicht zumindest annähernd rechteckförmige Platte ausgebildet ist, die entlang ihrer einen Längskante mit einer den Zylinder (30) bildenden Bohrung versehen ist, welche auf der Seite des Kolbens (36) mit einem Gasbeaufschlagungskanal (34) verbunden und auf der entgegengesetzten Seite offen ist.

3. Rückstrammeinrichtung nach Anspruch 2, **dadurch gekennzeichnet**, daß der Gasbeaufschlagungskanal (34) quer zur Achse des Zylinders (30) entlang einer Schmalseite der Platte angeordnet und an seinem von dem Zylinder (30) abgewandten Ende als Aufnahmebohrung für einen pyrotechnischen Gasgenerator (46) ausgestaltet ist.

4. Rückstrammeinrichtung nach einem der vorstehenden Ansprüche, **dadurch gekennzeichnet**, daß das Führungsteil (12) als Platte ausgebildet ist, die einen zur Achse des Zylinders (30) parallelen Längsschlitz (26) aufweist, und daß an dem Zylinderblock (16) ein Beschlagteil (20) befestigt ist mittels eines Bolzens (18), dessen Schaft (22) den Längsschlitz (26) durchgreift.

5. Rückstrammeinrichtung nach Anspruch 2, 3 oder 4, **dadurch gekennzeichnet**, daß der als Platte ausgebildete Zylinderblock (16) entlang seiner von dem Zylinder (30) abgewandten Schmalkante mit einer Nut (64) versehen ist, in die eine an dem Führungsteil (12) befestigte Führungsleiste (62) eingreift.

6. Rückstrammeinrichtung nach einem der vorstehenden Ansprüche, **dadurch gekennzeichnet**, daß zwischen Kolben (36) und Kolbenstange (40) ein umlaufender Freiraum vorgesehen ist, der axial durch je eine Ringschulter und radial innen durch eine Kegelfläche begrenzt ist, deren kleine Basis auf der Seite des Kolbens (36) gelegen ist, und daß in dem Freiraum mehrere Walzkörper (52) aufgenommen sind, deren Durchmesser etwa der mittleren radialen Tiefe des Freiraums entspricht.

7. Rückstrammeinrichtung nach Anspruch 6, **dadurch gekennzeichnet**, daß die Wälzkörper (52) im Zusammenwirken mit der sie umgebenden Zylinderwandung eine Rücklaufbremse bilden, deren Bremsfunktion durch Eindringen der Wälzkörper (52) in das Material der Zylinderwandung und plastische Verformung desselben unter Bildung von Längsrillen zustande kommt.

8. Rückstrammeinrichtung nach Anspruch 7, **dadurch gekennzeichnet**, daß Anzahl und Durchmesser der Wälzkörper (52) sowie das Material des Zylinders (30) so aufeinander abgestimmt sind, daS eine reproduzierbar definierte Rücklaufbremskraft erzeugt wird.

9. Rückstrammeinrichtung nach Anspruch 8, **dadurch gekennzeichnet**, daß die Wälzkörper (52) in Umfangsrichtung in jeweils gleichem Abstand voneinander gehalten sind.

10. Rückstrammeinrichtung nach einem der vorstehenden Ansprüche, **dadurch gekennzeichnet**, daß der Kolben/Zylinder-Rückstrammantrieb zwei parallele, im Abstand voneinander in demselben Zylinderblock angeordnete Kolben/Zylinder-Einheiten (120, 122) umfaßt, die durch einen gemeinsamen pyrotechnischen Gasgenerator (46) beaufschlagbar sind.

11. Rückstrammeinrichtung nach einem der vorstehenden Ansprüche, **dadurch gekennzeichnet**, daß an dem Zylinderblock (16B, 16C) ein flexibles Zugseil (130) verankert ist, das - gegebenenfalls über eine Umlenkrolle (132) - zu einem längsverschiebbar geführten Beschlagteil geführt und an diesem befestigt ist.

12. Rückstrammeinrichtung nach einem der vorstehenden Ansprüche, **dadurch gekennzeichnet**, daß dem pyrotechnischen Gasgenerator (46) ein mechanischer Zündmechanismus zugeordnet ist, der folgendes umfaßt:
- eine schwenkbar gelagerte, fahrzeugsensitive Trägheitsmasse (80);
- ein federbeaufschlagtes, schwenkbar gelagertes Schlagstück (84);
- einen Schlagbolzen (50), der mit einem freien Ende dem Schlagzünder (48) des Gasgenerators (46) gegenüberliegend und mit seinem anderen Ende dem Schlagstück (84) gegenüberliegend angeordnet ist;
- einen Auslosemechanismus, der im Bereitschaftszustand das Schlagstück (84) im Abstand von dem gegenüberliegenden Ende des Schlagbolzens (50) hält und bei fahrzeugsensitiver Verschwenkung der Trägheitsmasse (80) nach Überwindung einer Hemmschwelle das Schlagstück (84) freigibt, welches dann unter der Wirkung der Federbeaufschlagung zu dem gegenüberliegenden Ende des Schlagbolzens (50) getrieben wird, auf diesem aufschlägt und über den Schlagbolzen die Zündung des Gasgenerators (46) bewirkt.

13. Rückstrammeinrichtung nach Anspruch 12, **dadurch gekennzeichnet**, daß der Auslösemechanismus ein Rollengesperre umfaßt, mit
- einer an dem vom Schlagbolzen (50) abgewandten Ende des Schlagstücks (84) gelagerten Halterolle (90);
- einer an der Trägheitsmasse (80) gelagerten Auslöserolle (100);
- einer gehäusefest gelagerten Stützrolle (94); und
- einer im Bereitschaftszustand zwischen Halterolle (90), Auslöserolle (100) und Stützrolle (94) gehaltenen, losen Sperrolle (96),
und daß im Bereitschaftszustand die Sperrolle (96) zwischen der Halterolle (90) und der Stützrolle (94) eine Übertotpunktlage einnimmt, in der sie durch die Auslöserolle (100) gehalten wird, die sich ihrerseits in einer Übertotpunktlage befindet, in der sie durch ein gehäusefestes Widerlager abgestützt ist.

14. Rückstrammeinrichtung nach Anspruch 13, **dadurch gekennzeichnet**, dar das gehäusefeste Widerlager durch die Stützrolle (94) gebildet ist, an der sich die Trägheitsmasse (80) abstützt.

15. Rückstrammeinrichtung nach Anspruch 13 oder 14, **dadurch gekennzeichnet**, daß die Trägheitsmasse (80) als allgemein U-förmiger Bügel ausgebildet ist, der an dem Ende seines einen Schenkels schwenkbar gelagert ist und an dessen Ende des anderen Schenkels die Auslöserolle (100) angeordnet ist.

16. Rückstrammeinrichtung nach Anspruch 15, **dadurch gekennzeichnet**, daß der Bügel am Ende seines schwenkbar gelagerten Schenkels einen Ansatz (114) aufweist, der zu der Sperrolle (96) hin gerichtet ist und in geringem Abstand von dieser endet.

17. Rückstrammeinrichtung nach Anspruch 15 oder 16, **dadurch gekennzeichnet**, daß die Stützrolle (94) zwischen den Schenkeln des Bügels angeordnet ist und sich der Bügel mit der Innenseite seines die Schenkel verbindenden Steges am Umfang der Stützrolle abstützt.

18. Rückstrammeinrichtung nach einem der Ansprüche 12 bis 17, **dadurch gekennzeichnet**, daß die Trägheitsmasse (80) durch eine Sicherungseinrichtung (140, 142) in ihrer Bereitschaftsstellung arretierbar ist und daß die Sicherungseinrichtung auf die Benutzung des Sicherheitsgurt-Rückhaltesystems ansprechend die Arretierung der Trägheitsmasse (80) aufhebt.

19. Rückstrammeinrichtung nach einem der Ansprüche 12 bis 18, **dadurch gekennzeichnet**, daß der mechanische Zündmechanismus in einem flachen Gehäuse (56) aufgenommen ist, das mit einer Schmalseite, die der Schlagbolzen (50) durchquert, einer Schmalseite des Zylinderblockes (16) gegenüberliegend angeordnet und an dem Führungsteil (12) befestigt ist.

## Claims

1. Tightening means for safety belt restraining systems in vehicles comprising a pyrotechnical piston/cylinder tightening drive wherein at least the cylinder (30) of the piston/ cylinder tightening drive is formed in a cylinder block (16) which is guided displaceably parallel to the axis of the cylinder (30) on a bodywork-fixed or vehicle-seat-fixed guide member (12), the piston (36) acts on a first end of a piston rod (40) which at a second end is supported at a guide member (12), the piston (36) in the readiness position of the tightening means is inserted with the piston rod (40) into the cylinder (30) and upon pressure acting on the piston subjects the piston rod (40) to thrust, and wherein the cylinder block (16) is pushed away from the second end of the piston rod (16), characterized in that piston/cylinder tightening drive via fitting parts (14, 20) engaging the piston (36) on the one hand and the cylinder (36) on the other hand is inserted permanently into the force flow path of the safety belt system, that the fitting part (14) engaging the piston (36) is connected to the guide member (12) and that the piston (36) is formed at the first end of the piston rod (40).

2. Tightening means according to claim 1, characterized in that the cylinder block (16) is formed as flat plate which is at least approximately rectangular in plan view and which along its one longitudinal edge is provided with a bore which forms the cylinder (30) and which on the side of the piston (36) is connected to a gas action passage (34) and on the opposite side is open.

3. Tightening means according to claim 2, characterized in that the gas action passage (34) is arranged transversely of the axis of the cylinder (30) along a narrow side of the plate and at its end remote from the cylinder (30) is configured as receiving bore for a pyrotechnical gas generator (46).

4. Tightening means according to any one of the preceding claims, characterized in that the guide member (12) is formed as plate which comprises a longitudinal slot (26) parallel to the axis of the cylinder (30) and that to the cylinder block (16) a fitting part (20) is secured by means of a bolt or pin (18) of which the shank (22) passes through the longitudinal slot (26).

5. Tightening means according to claims 2, 3 or 4, characterized in that the cylinder block (16) formed as plate is provided along its narrow edge remote from the cylinder (30) with a groove (64) into which a guide strip (62) secured to the guide member (12) engages.

6. Tightening means according to any one of the preceding claims, characterized in that between the piston (36) and the piston rod (40) an encircling free space is provided which is defined axially by a respective annular shoulder and radially inwardly by a conical surface of which the minor base is disposed on the side of the piston (36) and that in the free space a plurality of roller elements (52) are accommodated of which the diameter corresponds substantially to the middle radial depth of the free space.

7. Tightening means according to claim 6, characterized in that the roller elements (52) form in conjunction with the cylinder wall surrounding them a return brake, the braking function of which is generated by penetration of the roller elements (52) into the material of the cylinder wall and plastic deformation thereof with formation of longitudinal grooves.

8. Tightening means according to claim 7, characterized in that the number and diameter of the roller elements (52) and the material of the cylinder (30) are adapted to each other in such a manner that a reproduceably defined return force is generated.

9. Tightening means according to claim 8, characterized in that the roller elements (52) are held at equal intervals apart in the peripheral direction.

10. Tightening means according to any one of the preceding claims, characterized in that the piston/cylinder tightening drive includes two parallel piston/cylinder units (120, 122) which are arranged spaced apart in the same cylinder block and which are adapted to be subjected to a common pyrotechnical gas generator (46).

11. Tightening means according to any one of the preceding claims, characterized in that to the cylinder block (16B, 16C) a flexible sheathed cable (130) is anchored which, possibly via a deflection roller (132), is led to a longitudinally displaceably guided fitting part and is secured to the latter.

12. Tightening means according to any one of the preceding claims, characterized in that there is associated with the pyrotechnical gas generator (46) a mechanical firing mechanism which includes the following:
- a pivotally mounted vehicle-sensitive inertia mass (80);
- a spring-loaded pivotally mounted strike piece (84);
- a firing pin (50) which is arranged with its free end lying opposite the impact fuse (48) of the gas generator (46) and with its other end lying opposite the strike piece (84);
- a trigger mechanism which in the readiness state holds the strike piece (84) at a distance from the opposite end of the firing pin (50) and on vehicle-sensitive pivoting of the inertia mass (80) after overcoming an inhibition threshold releases the strike piece (84) which then under the action of the spring biasing is driven to the oppositely disposed end of the firing pin (50), strikes the latter and via the firing pin effects firing of the gas generator (46).

13. Tightening means according to claim 12, characterized in that the trigger mechanism includes a roller blocking mechanism comprising
- a retaining roller (90) mounted at the end of the strike piece (84) remote from the firing pin (50);
- a release roller (100) mounted on the inertia mass (80);
- a support roller (94) mounted fixed with respect to the housing; and
- a loose blocking roller (96) held in the readiness state between retaining roller (90), release roller (100) and support roller (94),
and that in the readiness state the blocking roller (96) assumes between the retaining roller (90) and the support roller (94) an over-deadcentre position in which it is held by the release roller (100) which in turn is disposed in an over-deadcentre position in which it is supported by a housing-fixed abutment.

14. Tightening means according to claim 13, characterized in that the housing-fixed abutment is formed by the support roller (94) on which the inertia mass (80) bears.

15. Tightening means according to claims 13 or 14, characterized in that the inertia mass (80) is formed as generally U-shaped stirrup member which is pivotally mounted at the end of its one leg and on the end of the other leg thereof the release roller (100) is arranged.

16. Tightening means according to claim 15, characterized in that the stirrup member comprises at the end of its pivotally mounted leg a projection (114) which is directed towards the blocking roller (96) and ends at a slight distance from the latter.

17. Tightening means according to claim 15 or 16, characterized in that the support roller (94) is arranged between the legs of the stirrup member and the stirrup member bears with the inner side of its web connecting the legs on the periphery of the support roller.

18. Tightening means according to any one of claims 12 to 17, characterized in that the inertia mass (80) is arrestable by a securing means (140, 142) in its readiness position and that the securing means in response to the use of the safety belt restraining system cancels the arresting of the inertia mass (80).

19. Tightening means according to any one of claims 12 to 16, characterized in that the mechanical firing mechanism is received in a flat housing (56) which is arranged with a narrow side through which the firing pin (50) passes opposite a narrow side of the cylinder block (16) and is secured to the guide member (12).

## Revendications

1. Rétracteur pour systèmes de retenue de ceinture de sécurité dans des véhicules automobiles, comportant un mécanisme de rétraction pyrotechnique à cylindre et piston, dans lequel le cylindre (30) au moins du mécanisme de rétraction à cylindre et piston est formé dans un bloc-cylindre (16), qui est guidé coulissant sur une pièce de guidage (12), solidaire de la carrosserie ou du siège du véhicule, parallèlement à l'axe du cylindre (30), le piston (36) agit sur une première extrémité d'une tige de piston (40), qui est soutenue par sa seconde extrémité contre la pièce de guidage (12), le piston (36) en position d'attente du rétracteur est introduit avec la tige de piston 40 dans le cylindre (30) et, en cas d'action de la pression sur le piston, la tige de piston (40) est sollicitée en poussée, et dans lequel le bloc-cylindre (16) est repoussé par la seconde extrémité de la tige de piston (40), caractérisé en ce que le mécanisme de rétraction à cylindre et piston est inséré en permanence dans le parcours des lignes de force du système de ceinture de sécurité, par des garnitures (14, 20) agissant d'une part sur le piston (36) et d'autre part sur le cylindre (30), en ce que la garniture (14) agissant sur le piston (36) est relié à la pièce de guidage (12) et en ce que le piston (36) est formé sur la première extrémité de la tige de piston (40).

2. Rétracteur selon la revendication 1, caractérisé en ce que bloc-cylindre (16) est une plaque plane, au moins à peu près rectangulaire vue de dessus, qui est pourvue, le long de l'un de ses côtés longitudinaux, d'un alésage formant le cylindre (30), lequel alésage communique, du côté du piston (36), avec un canal d'arrivée de gaz (34) et est ouvert du côté opposé.

3. Rétracteur selon la revendication 2, caractérisé en ce que le canal d'arrivée de gaz (34) est placé perpendiculairement à l'axe du cylindre (30), le long d'un petit côté de la plaque, et est conçu comme un logement destiné à un générateur de gaz (46) pyrotechnique, à son extrémité opposée au cylindre (30).

4. Rétracteur selon l'une des revendications précédentes, caractérisé en ce que l'élément de guidage (12) est une plaque qui présente une fente longitudinale (26), parallèle à l'axe du cylindre (30), et en ce qu'une garniture (20) est fixée sur le bloc-cylindre (16), au moyen d'un boulon (18) dont la tige (22) traverse la fente longitudinale (26)

5. Rétracteur selon la revendication 2, 3 ou 4, caractérisé en ce que le bloc-cylindre (16), configuré en plaque, est pourvu, le long de son petit côté opposé au cylindre (30), d'une rainure (64) dans laquelle s'engage une baguette de guidage (62), fixée sur l'élément de guidage (12)

6. Rétracteur selon l'une des revendications précédentes, caractérisé en ce qu'il est prévu, entre le piston (36) et la tige de piston (40), un espace libre continu qui est limité axialement par un épaulement annulaire et à l'intérieur radialement par une surface conique dont la petite base est placée sur le côté du piston (36), et en ce que dans l'espace libre sont logés plusieurs corps de roulement (52) dont le diamètre correspond à peu près à la profondeur radiale moyenne de l'espace libre.

7. Rétracteur selon la revendication 6, caractérisé en ce que les corps de roulement (52) forment, en coopération avec la paroi de cylindre qui les entoure, un frein de retour dont la fonction de freinage est assurée par introduction des corps de roulement (52) dans la matière de la paroi du cylindre et par déformation plastique de cette matière, par formation de rainures longitudinales.

8. Rétracteur selon la revendication 7, caractérisé en ce que le nombre et le diamètre des corps de roulement (52) ainsi que la matière du cylindre (30) sont adaptés les uns aux autres de manière à engendrer une force de freinage de retour définie de façon reproductible.

9. Rétracteur selon la revendication 8, caractérisé en ce que les corps de roulement (52) sont maintenus dans la direction périphérique, à une même distance les uns des autres.

10. Rétracteur selon l'une des revendications précédentes, caractérisé en ce que le mécanisme de rétraction à cylindre et piston comprend deux unités à cylindre et piston (120, 122) parallèles, placées espacées l'une de l'autre dans le même bloc-cylindre et qui peuvent être soumises à l'action d'un générateur de gaz pyrotechnique (46) commun.

11. Rétracteur selon l'une des revendications précédentes, caractérisé en ce que sur le bloc-cylindre (16B, 16C) est ancré un câble de traction (130) flexible qui est guidé - éventuellement par l'intermédiaire d'un galet de renvoi (132) - jusqu'à une partie de garniture guidée de manière à pouvoir coulisser longitudinalement, et est fixé sur celle-ci.

12. Rétracteur selon l'une des revendications précédentes, caractérisé en ce qu'au générateur de gaz pyrotechnique (46) est associé un mécanisme d'allumage mécanique qui comporte :
- une masse d'inertie (80) montée pivotante, réagissant au véhicule ;
- une pièce de percussion (84) montée pivotante, soumise à l'action d'un ressort ;
- un percuteur (50) qui, par une extrémité libre, est placé face à l'amorce à percussion (48) du générateur de gaz (46) et, par son autre extrémité, face à la pièce de percussion (84) ;
- un mécanisme de déclenchement qui, en attente, maintient la pièce de percussion (84) à une certaine distance de l'extrémité du percuteur (50) lui faisant face et qui, en cas de pivotement, réagissant au véhicule, de la masse d'inertie (80), libère la pièce de percussion (84), après dépassement d'un seuil de retenue, laquelle pièce de percussion est poussée, sous l'effet du ressort, vers l'extrémité lui faisant face du percuteur (50), percute celui-ci et entraîne l'allumage du générateur de gaz (46), par l'intermédiaire du percuteur.

13. Rétracteur selon la revendication 12, caractérisé en ce que le mécanisme de déclenchement comprend un verrouillage à rouleaux avec
- un rouleau de maintien (90) monté à l'extrémité de la pièce de percussion (84), opposée au percuteur (50) ;
- un rouleau de déclenchement (100) monté sur la masse d'inertie (80) ;
- un rouleau d'appui (94) solidaire du boîtier ; et
- un rouleau de verrouillage (96) libre, maintenu dans l'état d'attente, entre le rouleau de maintien (90), le rouleau de déclenchement (100) et le rouleau d'appui (94),
et en ce qu'en attente, le rouleau de verrouillage (96) occupe une position de dépassement de point mort, entre le rouleau de maintien (90) et le rouleau d'appui (94), dans laquelle il est maintenu par le rouleau de déclenchement (100) qui, de son côté, se trouve dans une position de dépassement de point mort dans laquelle il est soutenu par une butée solidaire du boîtier.

14. Rétracteur selon la revendication 13, caractérisé en ce que la butée solidaire du boîtier est formée par le rouleau d'appui (94) contre lequel prend appui la masse d'inertie (80).

15. Rétracteur selon la revendication 13 ou 14, caractérisé en ce que la masse d'inertie (80) est un étrier généralement en U qui est monté pivotant à l'extrémité de l'une de ses branches et dont l'autre branche supporte à son extrémité le rouleau de déclenchement (100).

16. Rétracteur selon la revendication 15, caractérisé en ce que l'étrier comporte, à l'extrémité de sa branche montée pivotante, un prolongement (114) qui est dirigé vers le rouleau de verrouillage (96) et qui se termine à une faible distance de celui-ci.

17. Rétracteur selon la revendication 15 ou 16, caractérisé en ce que le rouleau d'appui (94) est placé entre les branches de l'étrier et en ce que l'étrier prend appui sur le pourtour du rouleau d'appui, par la face intérieure de son entretoise reliant les branches.

18. Rétracteur selon l'une des revendications 12 à 17, caractérisé en ce que la masse d'inertie (80) peut être bloquée en position d'attente par un dispositif de sûreté (140, 142) et en ce que le dispositif de sûreté, réagissant à l'utilisation du système de retenue de ceinture de sécurité, supprime le blocage de la masse d'inertie (80).

19. Rétracteur selon l'une des revendications 12 à 18, caractérisé en ce que le mécanisme d'allumage mécanique est logé dans un boîtier plat (56) qui, par un petit côté que traverse le percuteur (50), est placé face à un petit côté du bloc-cylindre (16) et est fixé sur l'élément de guidage (12).
